(19) Europäisches Patentamt / European Patent Office / Office européen des brevets

(11) **EP 3 430 423 B1**

(12) **EUROPÄISCHE PATENTSCHRIFT**

(45) Veröffentlichungstag und Bekanntmachung des Hinweises auf die Patenterteilung:
**30.03.2022** Patentblatt **2022/13**

(21) Anmeldenummer: **16747790.0**

(22) Anmeldetag: **05.08.2016**

(51) Internationale Patentklassifikation (IPC):
**G01S 15/931** (2020.01)     **G01S 15/46** (2006.01)
**G01S 15/86** (2020.01)      **G01S 15/87** (2006.01)

(52) Gemeinsame Patentklassifikation (CPC):
**G01S 15/46; G01S 15/86; G01S 15/878;**
**G01S 15/931;** G01S 2015/465; G01S 2015/938

(86) Internationale Anmeldenummer:
**PCT/EP2016/068797**

(87) Internationale Veröffentlichungsnummer:
**WO 2017/157483 (21.09.2017 Gazette 2017/38)**

(54) **VERFAHREN ZUR VERBESSERUNG EINER ERFASSUNG ZUMINDEST EINES OBJEKTS IN EINER UMGEBUNG EINES KRAFTFAHRZEUGS DURCH EINE INDIREKTE MESSUNG MIT SENSOREN, STEUEREINRICHTUNG, FAHRERASSISTENZSYSTEM SOWIE KRAFTFAHRZEUG**

METHOD FOR IMPROVING DETECTION OF AT LEAST ONE OBJECT IN AN ENVIRONMENT OF A MOTOR VEHICLE BY MEANS OF AN INDIRECT MEASUREMENT USING SENSORS, CONTROL DEVICE, DRIVER ASSISTANCE SYSTEM, AND MOTOR VEHICLE

PROCÉDÉ D'AMÉLIORATION D'UNE DÉTECTION D'AU MOINS UN OBJET DANS UN ENVIRONNEMENT D'UN VÉHICULE AUTOMOBILE PAR UNE MESURE INDIRECTE AVEC DES CAPTEURS, DISPOSITIF DE COMMANDE, SYSTÈME D'ASSISTANCE À LA CONDUITE AINSI QUE VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2016 DE 102016105022**
**18.03.2016 DE 102016105023**

(43) Veröffentlichungstag der Anmeldung:
**23.01.2019** Patentblatt **2019/04**

(73) Patentinhaber: **Valeo Schalter und Sensoren GmbH**
**74321 Bietigheim-Bissingen (DE)**

(72) Erfinder:
• **MILSCHEWSKI, Tino**
**74321 Bietigheim-Bissingen (DE)**
• **BARIANT, Jean-Francois**
**74321 Bietigheim-Bissingen (DE)**

(74) Vertreter: **Pothmann, Karsten et al**
**Valeo Schalter und Sensoren GmbH**
**CDA-IP**
**Laiernstraße 12**
**74321 Bietigheim-Bissingen (DE)**

(56) Entgegenhaltungen:
EP-A1- 1 731 922        WO-A1-2013/071190
DE-A1-102010 045 657    DE-A1-102013 221 263
DE-T5-112011 105 533    US-A1- 2009 292 468

• Sebastian Zuther ET AL: "Multisensorsystem mit schmalbandigen Radarsensoren zum Fahrzeugseitenschutz", , 1 January 2014 (2014-01-01), XP055662469, DOI: 10.18725/OPARU-2532 Retrieved from the Internet: URL:https://oparu.uni-ulm.de/xmlui/bitstre am/handle/123456789/2559/vts_8964_13452.pd f?sequence=1&isAllowed=y [retrieved on 2020-01-28]

**Beschreibung**

Die vorliegende Erfindung betrifft ein Verfahren zum Erfassen zumindest eines Objekts in einer Umgebung eines Kraftfahrzeugs, bei welchem ein erster Sensor zum Aussenden eines Sensorsignals angesteuert wird, von einem zweiten Sensor Sensordaten empfangen werden, welche das von dem zumindest einen Objekt reflektierte Sensorsignal beschreiben, aus den Sensordaten ein unscharfes Merkmal als Objektmerkmal zur Beschreibung des zumindest einen Objekts bestimmt wird, wobei das unscharfe Merkmal einen Abstand zwischen dem zumindest einen Objekt und dem ersten Sensor und einen Abstand zwischen dem zumindest einen Objekt und dem zweiten Sensor beschreibt. Zudem betrifft die Erfindung eine Steuereinrichtung sowie ein Fahrerassistenzsystem für ein Kraftfahrzeug. Schließlich betrifft die Erfindung ein Kraftfahrzeug.

Aus dem Stand der Technik sind unterschiedliche Verfahren bekannt, mit denen Objekte in der Umgebung eines Kraftfahrzeugs erfasst werden können. Beispielsweise können die Objekte mit Hilfe von entsprechenden Sensoren, beispielsweise Ultraschallsensoren, Radarsensoren, Lasersensoren oder Kameras, erkannt werden. Des Weiteren ist es bekannt, anhand der Sensorsignale der Sensoren einen Abstand zwischen dem Kraftfahrzeug und dem Objekt bzw. eine relative Lage zwischen dem Kraftfahrzeug und dem Objekt zu bestimmen.

Insbesondere in Zusammenhang mit Ultraschallsensoren ist es bekannt, dass ein Objekt mit Hilfe einer indirekten Messung bestimmt werden kann. Zu diesem Zweck sendet ein erster Ultraschallsensor ein Ultraschallsignal aus. Dieses Ultraschallsignal wird dann an dem Objekt reflektiert und von einem zweiten Ultraschallsensor empfangen. Anhand der Laufzeit zwischen dem Aussenden des Ultraschallsignals von dem ersten Sensor und dem Empfangen des von dem Objekt reflektierten Ultraschallsignals mit dem zweiten Sensor kann dann ein Abstand des Objekts zu dem ersten Sensor und dem zweiten Sensor bestimmt werden. Beispielsweise kann vereinfacht angenommen werden, dass sich das Objekt auf einem Kreis befindet, wobei der Mittelpunkt des Kreises mittig zwischen den beiden Sensoren bzw. den Positionen der beiden Sensoren angeordnet ist.

Eine Winkelinformation bezüglich des Objekts kann aus einer solchen indirekten Messung aber nicht abgeleitet werden.

Darüber hinaus ist es aus dem Stand der Technik bekannt, die Ergebnisse von mehreren oder unterschiedlichen Sensoren zu fusionieren, um Objekte zuverlässiger erfassen zu können. Hierzu kann es beispielsweise vorgesehen sein, aus den Sensordaten, die von dem jeweiligen Sensor bereitgestellt werden, jeweils ein Objektmerkmal zu bestimmen, welches das Objekt beschreibt. Ein solches Objektmerkmal kann beispielsweise ein Punktmerkmal oder ein Linienmerkmal sein, welches das Objekt oder einen Teil davon beschreibt. Für das Objektmerkmal kann auch eine räumliche Unsicherheit bzw. Unschärfe bestimmt werden. Die Objektmerkmale können auch in eine digitale Umgebungskarte eingetragen werden, welche die Umgebung des Kraftfahrzeugs beschreibt. Zum Fusionieren der Messungen der verschiedenen Sensoren können die Objektmerkmale zusammengelegt werden.

Die DE 11 2011 105 533 T5 zeigt eine Objektdetektionsvorrichtung, die eine reflektierte Welle eines Sendesignals, das eine Ultraschallwelle ist, von einem Hindernis über sowohl direktes Senden und Empfangen als auch indirektes Senden und Empfangen ermittelt.

Die DE 10 2013 221 263 A1 zeigt einen Golftrolley, der autonom einem Golfspieler folgen kann. Um dies zu ermöglichen, umfasst der Golftrolley einen ersten, zweiten und dritten Ultraschallwandler, die am Trolley beabstandet voneinander angeordnet sind. Von einem mittig angeordneten Ultraschallwandler wird ein Ultraschallimpuls ausgesendet, der an einem realen Objekt im Fahrweg des Golftrolleys reflektiert wird. Von dem Echosignal wird an jedem der drei Ultraschallwandler jeweils eine Laufzeit berechnet. Basierend auf den jeweiligen Laufzeiten werden Abstände berechnet, die die jeweiligen Ultraschallwandler zu dem Objekt aufweisen. Eine Positionsbestimmung geschieht schließlich auf Basis der hierbei ermittelten Abstandswerte.

Die EP 1 731 922 A1 betrifft ein Verfahren und eine Vorrichtung zum Bestimmen von Freiflächen in der Umgebung eines Kraftfahrzeugs. Dabei liefert eine Signallaufzeitmessung über einen Messbereich Informationen. Aus dem Messergebnis einer Signallaufzeitmessung kann so eine Objektwahrscheinlichkeitsverteilung bestimmt werden, die auch als Sensor- oder Messmodell bezeichnet wird. Die Objektwahrscheinlichkeit ist von dem Messergebnis abhängig. Möglichst alle Informationen, die diese Objektwahrscheinlichkeitsverteilung enthält, sollen für die Ermittlung von Freiflächen in der Umgebung des Kraftfahrzeugs verwendet werden.

Die DE 10 2010 045 657 A1 zeigt ein Umfeld-Überwachungssystem für ein Fahrzeug, wobei das Umfeld-Überwachungssystem mindestens zwei Abstandssensoren zur Abstandserkennung durch Laufzeitmessung von Detektionssignalen aufweist, wobei mindestens ein Abstandssensor zur Detektion eines von einem anderen Abstandssensor ausgegebenen und von dem Objekt reflektierten Detektionssignals und zum Erzeugen eines indirekten Messsignals in einem indirekten Betriebsmodus betreibbar ist.

Die US 2009/0292468 A1 zeigt ein Verfahren, mit dem Kameradaten und Radardaten fusioniert werden.

Die WO 2013/071190 A1 zeigt einen mobilen Roboter, der dazu eingerichtet ist, sich in einem unbekannten Umfeld zu lokalisieren.

Sebastian Zuther ET AL:" Multisensorsystem mit schmalbandigen Radarsensoren zum Fahrzeugseitenschutz", 1 Januar 2014, XP055662469, DOI: 10.18725/OPARU-2532, beschreibt eine Systemarchitektur eines Fahrzeugsicherheitssystems, welche auf der Basis von vier Nahbereichsradarsensoren das gesamte Fahrzeugumfeld überwachen kann.

Es ist Aufgabe der vorliegenden Erfindung, eine Lösung aufzuzeigen, wie eine Erfassung von Objekten in einer Umgebung eines Kraftfahrzeugs bei einer indirekten Messung mit Sensoren des Kraftfahrzeugs verbessert werden kann.

Diese Aufgabe wird erfindungsgemäß durch ein Verfahren, durch eine Steuereinrichtung, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Bei einer Ausführungsform eines Verfahrens zum Erfassen zumindest eines Objekts in einer Umgebung eines Kraftfahrzeugs wird bevorzugt ein erster Sensor zum Aussenden eines Sensorsignals angesteuert. Ferner werden insbesondere von einem zweiten Sensor Sensordaten empfangen, welche das von dem zumindest einen Objekt reflektierte Sensorsignal beschreiben. Weiterhin ist es bevorzugt vorgesehen, dass aus den Sensordaten ein unscharfes Merkmal als Objektmerkmal zur Beschreibung des zumindest einen Objekts bestimmt wird, wobei das unscharfe Merkmal einen Abstand zwischen dem zumindest einen Objekt und dem ersten Sensor und einen Abstand zwischen dem zumindest einen Objekt und dem zweiten Sensor beschreibt. Insbesondere wird das unscharfe Merkmal als Ellipse beschrieben. Zudem wird insbesondere anhand von Sensordaten zumindest einer weiteren Messung des ersten und/oder des zweiten Sensors ein weiteres Objektmerkmal bestimmt, welches das zumindest eine Objekt beschreibt. Das weitere Objektmerkmal und das unscharfe Merkmal werden insbesondere mit einer Innovationsfunktion in einen gemeinsamen Zustandsraum überführt, wobei die Innovationsfunktion eine Ähnlichkeit zwischen dem unscharfen Merkmal und dem weiteren Objektmerkmal beschreibt. Ferner wird ein zusammengelegtes Objektmerkmal bevorzugt aus dem weiteren Objektmerkmal anhand der Innovationsfunktion bestimmt.

Ein erfindungsgemäßes Verfahren dient zum Erfassen zumindest eines Objekts in einer Umgebung eines Kraftfahrzeugs. Bei dem Verfahren wird ein erster Sensor zum Aussenden eines Sensorsignals angesteuert. Zudem werden von einem zweiten Sensor Sensordaten empfangen, welche das von dem zumindest einen Objekt reflektierte Sensorsignal beschreiben. Aus den Sensordaten wird ein unscharfes Merkmal als Objektmerkmal zur Beschreibung des zumindest einen Objekts bestimmt, wobei das unscharfe Merkmal einen Abstand zwischen dem zumindest einen Objekt und dem ersten Sensor und einen Abstand zwischen dem zumindest einen Objekt und dem zweiten Sensor beschreibt. Dabei wird das unscharfe Merkmal als Ellipse beschrieben. Zudem wird anhand von Sensordaten zumindest einer weiteren Messung des ersten und/oder des zweiten Sensors ein weiteres Objektmerkmal bestimmt, welches das zumindest eine Objekt beschreibt. Das weitere Objektmerkmal und das unscharfe Merkmal werden mit einer Innovationsfunktion in einen gemeinsamen Zustandsraum überführt, wobei die Innovationsfunktion eine Ähnlichkeit zwischen dem unscharfen Merkmal und dem weiteren Objektmerkmal beschreibt. Schließlich wird ein zusammengelegtes Objektmerkmal aus dem weiteren Objektmerkmal anhand der Innovationsfunktion bestimmt.

Mit Hilfe des Verfahrens sollen ein oder mehrere Objekte in der Umgebung des Kraftfahrzeugs erfasst bzw. erkannt werden. Das Verfahren kann beispielsweise mit einer Steuereinrichtung bzw. einem elektronischen Steuergerät des Kraftfahrzeugs durchgeführt werden. Mit der Steuereinrichtung kann ein erster Sensor des Kraftfahrzeugs angesteuert werden, so dass der erste Sensor in Folge der Ansteuerung ein Sensorsignal aussendet. Dieses ausgesendete Sensorsignal trifft dann auf das zumindest eine Objekt und wird von diesem reflektiert. Das reflektierte Sensorsignal bzw. das Echo des Sensorsignals wird dann von dem zweiten Sensor empfangen. Bei dem ersten und dem zweiten Sensor handelt es sich um Ultraschallsensoren. Wenn der zweite Sensor das reflektierte Ultraschallsignal empfangen hat, stellt dieser Sensordaten bereit, welche an die Steuereinrichtung übertragen werden. Diese Sensordaten können beispielsweise mehrere Sensorwerte bzw. Messwerte umfassen, welche das reflektierte Sensorsignal beschreiben. Mit Hilfe der Steuereinrichtung kann nun anhand der Laufzeit zwischen dem Aussenden des Sensorsignals mit dem ersten Sensor und dem Empfangen des reflektierten Sensorsignals mit dem zweiten Sensor eine Laufzeit bestimmt werden. Anhand dieser Laufzeit kann nun ermittelt werden, wie weit das Objekt von dem ersten Sensor und dem zweiten Sensor entfernt ist. Weiterhin ist es vorgesehen, dass mit Hilfe der Steuereinrichtung ein unscharfes Merkmal bzw. ein unscharfes Objektmerkmal bestimmt wird, welches zur Beschreibung des Objekts dient.

Ein solches unscharfes Merkmal stellt ein Objektmerkmal zur Beschreibung des Objekts dar. Das unscharfe Merkmal ergibt sich beispielsweise dadurch, dass anhand der Sensordaten bzw. der Laufzeit des Sensorsignals nur Abstandsinformationen bezüglich des Objekts abgeleitet werden können. Das unscharfe Merkmal beschreibt einen Abstand zwischen dem ersten Sensor und dem Objekt sowie einen Abstand zwischen dem zweiten Sensor und dem Objekt. Aus den Sensordaten können keine Winkelinformationen bezüglich des Objekts abgeleitet werden. Somit kann die relative Lage zwischen den Sensoren und dem Objekt nicht genau bestimmt werden. Das unscharfe Merkmal kann beispielsweise in eine digitale Umgebungskarte eingetragen werden, welche die Umgebung des Kraftfahrzeugs beschreibt. Dabei kann das unscharfe Merkmal auch mit einer räumlichen Unsicherheit bzw. einer Unschärfe in die Umgebungskarte eingetragen werden. In diese Umgebungskarte können auch weitere Objektmerkmale eingetragen werden. Diese Objektmerkmale können beispielsweise aus Messungen mit anderen Sensoren des Kraftfahrzeugs bestimmt worden sein. Es kann auch vorgesehen sein, dass bereits weitere Objektmerkmale mit dem ersten und/oder dem zweiten Sensor bestimmt wurden.

Erfindungsgemäß ist es nun vorgesehen, dass das unscharfe Merkmal als Ellipse beschrieben wird. Ferner wird anhand von Sensordaten zumindest einer weiteren Messung des ersten und/oder des zweiten Sensors ein weiteres Objektmerkmal bestimmt, welches das zumindest eine Objekt beschreibt, und das unscharfe Merkmal wird mit dem Objektmerkmal zusammengelegt. Ein solches Objektmerkmal kann beispielsweise ein Punkt bzw. ein Punktmerkmal sein, welches eine Position des Objekts oder eines Teils davon im Raum beschreibt. Bei dem Objektmerkmal kann es sich auch um eine Linie bzw. ein Linienmerkmal handeln, welches eine Grenze eines Objekts oder eines Teils davon beschreibt. Solche Objektmerkmale sollen nun mit dem unscharfen Merkmal bzw. der Ellipse zusammengelegt werden, um das Objekt in der Umgebung näher charakterisieren zu können. Des Weiteren wird das weitere Objektmerkmal und das unscharfe Merkmal mit einer Innovationsfunktion in einen gemeinsamen Zustandsraum überführt, wobei die Innovationsfunktion eine Ähnlichkeit zwischen dem Objektmerkmal und dem unscharfen Merkmal beschreibt und das zusammengelegte Objektmerkmal wird aus dem Objektmerkmal anhand der Innovationsfunktion bestimmt. Das weitere Objektmerkmal und das unscharfe Merkmal können in einen gemeinsamen Zustandsraum überführt bzw. transformiert werden. Dieser Zustandsraum kann beispielsweise ein gemeinsames Koordinatensystem für das weitere Objektmerkmal und das unscharfe Merkmal darstellen. Insbesondere kann der Zustandsraum von der Umgebungskarte verschieden sein. In dem Zustandsraum kann ein Zustand des weiteren Objektmerkmals und ein Zustand des unscharfen Merkmals beschrieben werden. In diesem Zustandsraum wird auch die Innovationsfunktion, welche ein Ähnlichkeitsmaß zum Bestimmen einer Ähnlichkeit zwischen dem weiteren Objektmerkmal und dem unscharfen Merkmal darstellen kann, bestimmt. Insbesondere kann die Innovationsfunktion beschreiben, wie ähnlich der Zustand des weiteren Objektmerkmals zu dem Zustand des unscharfen Merkmals ist. Mit Hilfe der Innovationsfunktion können die jeweiligen Zustände des weiteren Objektmerkmals und des unscharfen Merkmals so dargestellt werden, dass nur die Zustände und/oder Dimensionen berücksichtigt werden, welche auch für die Bestimmung der Ähnlichkeit von Interesse sind. Beispielsweise kann die Innovationsfunktion einen Abstand zwischen dem weiteren Objektmerkmal und dem unscharfen Merkmal oder einen Unterschied bezüglich der Orientierung des weiteren Objektmerkmals und des unscharfen Merkmals beschreiben. Anhand der Innovationsfunktion kann zunächst bestimmt werden, ob das unscharfe Merkmal dem weiteren Objektmerkmal zugeordnet werden kann. Falls die Zuordnung erfolgt ist, kann die Innovationsfunktion auch dafür genutzt werden, um aus dem weiteren Objektmerkmal das zusammengelegte Objektmerkmal abzuleiten. Somit kann das Objekt einerseits durch zumindest eine direkte Messung, die mit dem ersten und/oder zweiten Sensor durchgeführt wird, und anderseits durch eine indirekte Messung, die mit dem ersten und dem zweiten Sensor durchgeführt wird, erfasst werden. Beispielsweise kann das Objekt zunächst anhand von mehreren direkten und/oder indirekten Messungen bestimmt werden und in eine digitale Umgebungskarte eingetragen werden. Danach kann ein solches Objekt mit einer indirekten Messung fusioniert und damit verbessert werden. Durch die Innovationsfunktion können die Ergebnisse der Messungen vereint werden und somit die Erkennung des Objekts verbessert werden.

Bevorzugt werden Brennpunkte der Ellipse anhand einer Position des ersten Sensors und des zweiten Sensors bestimmt, eine Länge einer großen Halbachse der Ellipse wird anhand einer Laufzeit des Sensorsignals bestimmt und eine Länge einer kleinen Halbachse der Ellipse wird anhand der Brennpunkte und der Länge der großen Halbachse bestimmt. Die Positionen bzw. Einbaupositionen des ersten Sensors und des zweiten Sensors sind bekannt. Diese können beispielsweise in einem Speicher der Steuereinrichtung hinterlegt sein. Die Ellipse wird nun so bestimmt, dass die jeweiligen Positionen des ersten Sensors und des zweiten Sensors den beiden Brennpunkten der Ellipse zugeordnet werden. Des Weiteren wird die Länge der großen Halbachse der Ellipse anhand der Laufzeit des Sensorsignals bestimmt. Hierbei wird davon ausgegangen, dass sich das Objekt, von dem das Sensorsignal reflektiert wurde, auf der Ellipse befindet. Die Laufzeit des Sensorsignals beschreibt den Weg von einem ersten Brennpunkt zu dem Punkt auf der Ellipse, der das Objekt beschreibt, zuzüglich des Wegs von diesem Punkt zu einem zweiten Brennpunkt. Die Strecke, die der Laufzeit zugeordnet werden kann, entspricht also dem Zweifachen der großen Halbachse bzw. der Länge der großen Achse der Ellipse. Aus der Lage der Brennpunkte und der Länge der großen Halbachse kann die Länge der kleinen Halbachse abgeleitet werden. Die Ellipse kann somit auf einfache Weise anhand der bekannten Positionen der Sensoren und der Laufzeit, welche aus dem Sensorsignal bestimmt wird, ermittelt werden. Dadurch, dass das unscharfe Merkmal bei der indirekten Messung mit den Sensoren als Ellipse und nicht als Kreis beschrieben wird, kann eine genauere Information über die Lage des Objekts bereitgestellt werden. Dies ermöglicht insgesamt eine genauere und zuverlässigere Erfassung des zumindest einen Objekts.

Bevorzugt wird eine Exzentrizität der Ellipse anhand eines Abstands der Brennpunkte bestimmt und die Länge der kleinen Halbachse wird aus der Länge der großen Halbachse und der Exzentrizität bestimmt. Da die jeweiligen Positionen bzw. Einbaupositionen der beiden Sensoren bekannt sind, kann auch der Abstand zwischen dem ersten Sensor und dem zweiten Sensor bestimmt werden. Die Hälfte dieses Abstands kann auch als Exzentrizität der Ellipse bezeichnet werden. Aus dieser Exzentrizität und der Länge der großen Halbachse der Ellipse kann dann die Länge der kleinen Halbachse der Ellipse bestimmt werden. Die Länge der kleinen Halbachse der Ellipse ergibt sich aus der Quadratwurzel der Länge der großen Halbachse zum Quadrat abzüglich der Exzentrizität zum Quadrat. Somit kann die Länge der kleinen Halbachse der Ellipse, welche das unscharfe Merkmal beschreibt, auf einfache Weise und innerhalb einer kurzen Rechenzeit bestimmt werden.

In einer weiteren Ausführungsform wird das weitere Objektmerkmal bestimmt und in eine digitale Umgebungskarte, welche die Umgebung des Kraftfahrzeugs beschreibt, eingetragen und anschließend wird das unscharfe Merkmal bestimmt und in die digitale Umgebungskarte eingetragen. Es kann der Fall sein, dass das Objektmerkmal bereits in der Umgebungskarte eingetragen ist. Im Anschluss daran kann dann das unscharfe Merkmal bestimmt werden. Nun kann zunächst überprüft werden, ob das Objektmerkmal und das unscharfe Merkmal das gleiche Objekt in der Umgebung beschreiben. Es kann also überprüft werden, ob das unscharfe Merkmal dem Objektmerkmal miteinander fusioniert werden können. Dabei kann zunächst eine Zuordnung bzw. Assoziation erfolgen, welche der Überprüfung dient, ob eine Fusionierung bzw. Zusammenlegung des unscharfen Merkmals mit dem weiteren Objektmerkmal sinnvoll ist. Bei diesem Zusammenlegen, kann ausgehend von dem Objektmerkmal ein zusammengelegtes bzw. aktualisiertes Objektmerkmal bestimmt werden. Dieses zusammengelegte Objektmerkmal wird auf Grundlage des unscharfen Objektmerkmals bestimmt. Damit kann das Objekt zuverlässiger erfasst werden.

In einer Ausführungsform wird zum Bestimmen des zusammengelegten Objektmerkmals aus dem weiteren Objektmerkmal eine lineare Abbildungsvorschrift bestimmt, welche die Innovationsfunktion und einen Verstärkungsfaktor für die Innovationsfunktion umfasst, wobei der Verstärkungsfaktor von einer räumlichen Unsicherheit des weiteren Objektmerkmals und einer räumlichen Unsicherheit des unscharfen Merkmals abhängig ist. Um das zusammengelegte Objektmerkmal zu bestimmen, wird die lineare Abbildungsvorschrift ermittelt. Diese Abbildungsvorschrift kann auch als Filter bezeichnet werden. Grundsätzlich kann die Abbildungsvorschrift nach Art eines Kalman-Filters definiert sein. Die Abbildungsvorschrift kann die Innovationsfunktion und den Verstärkungsfaktor, mit dem die Innovationsfunktion multipliziert wird, enthalten. Dieser Verstärkungsfaktor kann auch als Kalman-Verstärkung bezeichnet werden. Der Verstärkungsfaktor kann in Abhängigkeit von der jeweiligen räumlichen Unsicherheit des weiteren Objektmerkmals und des unscharfen Merkmals bestimmt werden. Die räumliche Unsicherheit kann mit Hilfe der Kovarianz bzw. der Kovarianzmatrix der jeweiligen Zustände bzw. Merkmale bestimmt werden. Damit kann das zusammengeführte Objektmerkmal unter Berücksichtigung der räumlichen Unsicherheit bestimmt werden.

Weiterhin ist es vorteilhaft, wenn der Verstärkungsfaktor derart bestimmt wird, dass eine räumliche Unsicherheit des zusammengelegten Objektmerkmals minimal ist. Um das zusammengelegte Objektmerkmal möglichst zuverlässig zu bestimmen, kann der Verstärkungsfaktor so bestimmt werden, dass die räumliche Unsicherheit des zusammengelegten Objektmerkmals möglichst gering ist. Der Verstärkungsfaktor kann also so bestimmt werden, dass die Kovarianzmatrix des zusammengelegten Objektmerkmals minimal ist. Die Kovarianzmatrix kann beispielsweise dadurch minimiert werden, dass die Eigenwerte der Kovarianzmatrix minimiert werden. Hierbei kann die Kovarianzmatrix mit einem beliebigen Einheitsvektor transformiert werden und diese skalare Projektion kann anschließend minimiert werden. Damit kann der Verstärkungsfaktor zuverlässig bestimmt werden.

Es kann auch vorgesehen sein, dass anhand der Innovationsfunktion eine Grenze bestimmt wird und das unscharfe Merkmal bei der Bestimmung des zusammengelegten Objektmerkmals unberücksichtigt bleibt, falls die Innovationsfunktion die Grenze überschreitet. Um zu entscheiden, ob das unscharfe Merkmal und das Objektmerkmal zusammengelegt werden sollen, kann die Innovationsfunktion genutzt werden. Insbesondere können die Erwartung der Innovationsfunktion und/oder die Kovarianz der Innovationsfunktion bestimmt werden. Hieraus kann eine Grenze, welche auch als Mahalanobis-Distanz bezeichnet wird, abgeleitet werden. Falls die Mahalanobis-Distanz einer Innovation, kleiner als diese Grenze ist, kann das zusammengelegte Objektmerkmal bestimmt werden. Dabei beschreibt die Innovation die Ausgabe der Innovationsfunktion. Für den Fall, dass die Innovation größer als diese Grenze ist, kann das unscharfe Merkmal nicht berücksichtigt werden.

Bevorzugt wird als das weitere Objektmerkmal ein Punktmerkmal oder ein Linienmerkmal bestimmt. Ein solches Punktmerkmal kann beispielsweise dadurch bestimmt werden, dass das Objekt mit dem ersten Sensor und/oder dem zweiten Sensor zu mehreren zeitlich aufeinanderfolgenden Zeitpunkten bzw. in mehreren zeitlich aufeinanderfolgenden Messungen erfasst wird. Beispielsweise mit Hilfe von Triangulation kann die relative Lage zwischen dem ersten und/oder dem zweiten Sensor zu dem Objekt bestimmt werden. Bei dem weiteren Objektmerkmal kann es sich auch um eine Linie bzw. ein Linienmerkmal handeln, welches eine Grenze eines Objekts oder eines Teils davon beschreibt. Ein solches Linienmerkmal wird beispielsweise erhalten, wenn das Kraftfahrzeug an dem Objekt vorbeibewegt wird und während des Vorbeibewegens fortlaufend Messungen durchgeführt werden. Die jeweiligen Messwerte bzw. Sensordaten, welche den Abstand zu dem Objekt beschreiben, können dann zu einem Linienmerkmal zusammengefasst werden. Es kann auch vorgesehen sein, dass eine Mehrzahl von Messwerten bestimmt wird und eine Linie durch die Messwerte gelegt wird, um das Linienmerkmal zu erhalten.

Weiterhin ist es vorteilhaft, wenn zum Bestimmen der Innovationsfunktion ein Messmodell bestimmt wird, welches einen Abstand zwischen dem unscharfen Merkmal und dem Punktmerkmal oder einen Abstand zwischen dem unscharfen Merkmal und dem Linienmerkmal beschreibt. Das Messmodell kann insbesondere einen Messraum abbilden. Falls das weitere Objektmerkmal das Punktmerkmal ist, wird zum Bestimmen des Messmodells insbesondere eine generierte Ellipse so bestimmt, dass das Punktmerkmal auf der generierten Ellipse liegt. Es wird also eine generierte Ellipse, welche aus als Messellipse bezeichnet werden kann, zum Bestimmen des Messmodells bestimmt. Diese generierte Ellipse wird auf Grundlage der Ellipse bestimmt, welche das unscharfe Merkmal bzw. die Messung beschreibt.

Dabei weisen die generierte Ellipse und die Ellipse bevorzugt die gleichen Brennpunkte auf. Diese generierte Ellipse wird so bestimmt, dass das Punktmerkmal auf der generierten Ellipse liegt. Es wird also überprüft, wie ein unscharfes Merkmal in Form einer Ellipse aussehen müsste, wenn mit diesem das Punktmerkmal als das Objekt gemessen wird. Da die Ellipse und die generierte Ellipse die gleichen Brennpunkte aufweisen, beschreibt die Innovation den Unterschied zwischen den Längen der großen Halbachsen. Das Messmodell beschreibt die Hälfte der Strecke von der Position des ersten Sensors über das Punktmerkmal zu der Position des zweiten Sensors. Die Hälfte dieser Strecke entspricht der großen Halbachse. Dies ermöglicht eine einfache Bestimmung des Messmodells für den Fall, dass das Objektmerkmal das Punktmerkmal ist.

Falls das weitere Objektmerkmal das Linienmerkmal ist, wird zum Bestimmen des Messmodells insbesondere eine generierte Ellipse so bestimmt, dass das Linienmerkmal tangential zu der generierten Ellipse verläuft. Grundsätzlich könnte zum Bestimmen des Messmodells die generierte Ellipse so bestimmt werden, dass sich diese mit dem Linienmerkmal schneidet. Hieraus ergeben sich aber zwei Schnittpunkte, wodurch keine eindeutige Lösung bestimmt werden kann. Daher wird die generierte Ellipse so bestimmt, dass diese nur einen einzigen Schnittpunkt mit dem Linienmerkmal aufweist. Dies ist der Fall, wenn das Linienmerkmal tangential zu der generierten Ellipse verläuft. Somit kann auch das Messmodell für den Fall, dass das Objektmerkmal das Linienmerkmal ist, auf einfache Weise bestimmt werden.

Bevorzugt wird eine Innovation, welche eine Ausgabe der Innovationsfunktion beschreibt, anhand eines Unterschieds zwischen der Länge der großen Halbachse der Ellipse und dem Messmodell bestimmt. Wie bereits erläutert beschreibt das Messmodell die Länge der großen Halbachse der generierten Ellipse. Diese kann mit der Länge der großen Halbachse der Ellipse, welche als unscharfes Merkmal bestimmt wurde, verglichen werden. Somit kann bestimmt werden, wie sich die Ellipse als unscharfes Merkmal bzw. die gemessene Ellipse von der generierten Ellipse unterscheidet. Somit kann auf einfache Weise die Ähnlichkeit zwischen dem unscharfen Merkmal bzw. der Ellipse und dem Objektmerkmal, dem Punktmerkmal oder dem Linienmerkmal, bestimmt werden.

Eine erfindungsgemäße Steuereinrichtung für ein Fahrerassistenzsystem eines Kraftfahrzeugs ist zum Durchführen eines erfindungsgemäßen Verfahrens ausgelegt ist. Die Steuereinrichtung kann einen Rechner, einen Mikroprozessor, einen digitalen Signalprozessor oder dergleichen umfassen. Bevorzugt ist die Steuereinrichtung durch ein elektronisches Steuergerät des Kraftfahrzeugs gebildet.

Ein erfindungsgemäßes Fahrerassistenzsystem für ein Kraftfahrzeug umfasst eine erfindungsgemäße Steuereinrichtung sowie einen ersten Sensor und einen zweiten Sensor, welche insbesondere Ultraschallsensoren sind. Die Steuereinrichtung ist zur Datenübertragung mit dem ersten und dem zweiten Sensor verbunden. Der erste Sensor dient dabei als Sender zum Aussenden des Sensorsignals. Der zweite Sensor dient als Empfänger zum Empfangen des von dem zumindest einen Objekt reflektierten Sensorsignals. Es kann auch vorgesehen sein, dass das Fahrerassistenzsystem weitere Sensoren aufweist, welche ein Ultraschallsensor, eine Kamera, ein Radarsensor, ein Lidar-Sensor, ein Laserscanner oder dergleichen sein können.

Eine weitere Ausführungsform betrifft ein Verfahren zum Erfassen zumindest eines Objekts in einer Umgebung eines Kraftfahrzeugs. Hierbei wird bevorzugt ein erster Sensor zum Aussenden eines Sensorsignals angesteuert. Ferner werden insbesondere von einem zweiten Sensor Sensordaten empfangen, welche das von dem zumindest einen Objekt reflektierte Sensorsignal beschreiben. Weiterhin ist es bevorzugt vorgesehen, dass aus den Sensordaten ein unscharfes Merkmal als Objektmerkmal zur Beschreibung des zumindest einen Objekts bestimmt wird, wobei das unscharfe Merkmal einen Abstand zwischen dem zumindest einen Objekt und einer Position des ersten Sensors und/oder einer Position des zweiten Sensors beschreibt. Insbesondere wird das unscharfe Merkmal als Ellipse beschrieben, wobei Brennpunkte der Ellipse anhand der Position des ersten Sensors und des zweiten Sensors bestimmt werden. Weiterhin wird eine große Halbachse der Ellipse bevorzugt anhand einer Laufzeit des Sensorsignals bestimmt und eine Länge einer kleinen Halbachse der Ellipse wird insbesondere anhand der Brennpunkte und der Länge der großen Halbachse bestimmt.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:

Fig. 1 ein Kraftfahrzeug gemäß einer Ausführungsform der Erfindung, welches ein Fahrerassistenzsystem mit einer Mehrzahl von Sensoren zum Erfassen eines Objekts umfasst;

Fig. 2 einen Kreis, welcher zur Beschreibung der Position des Objekts bei einer direkten Messung der Sensoren herangezogen wird;

Fig. 3 eine Ellipse, welche zur Beschreibung der Position des Objekts bei einer indirekten Messung der Sensoren herangezogen wird;

Fig. 4 die Ellipse aus Fig. 3 in einer weiteren Ausführungsform;

Fig. 5 eine schematische Darstellung der Ellipse und eines Punktmerkmals, wobei das Punktmerkmal und die Ellipse zusammengelegt werden sollen; und

Fig. 6 eine schematische Darstellung der Ellipse und eines Linienmerkmals, wobei das Linienmerkmal und die Ellipse zusammengelegt werden sollen.

In den Figuren werden gleiche und funktionsgleiche Elemente mit den gleichen Bezugzeichen versehen.

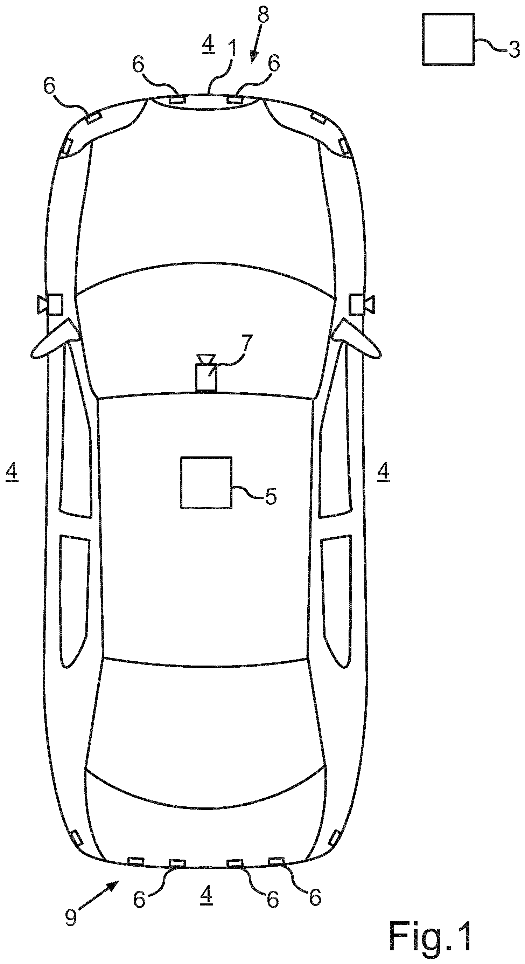

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, mit welchem zumindest ein Objekt 3 in einer Umgebung 4 des Kraftfahrzeugs 1 erfasst werden kann.

Das Fahrerassistenzsystem 2 umfasst eine Steuereinrichtung 5, die beispielsweise durch ein elektronisches Steuergerät (ECU - Electronic Control Unit) des Kraftfahrzeugs 1 gebildet sein kann. Darüber hinaus umfasst das Fahrerassistenzsystem 2 eine Mehrzahl von Sensoren 6, 7. Bei den Sensoren 6, 7 kann es sich beispielsweise um Ultraschallsensoren, Kameras, Radarsensoren, Lidar-Sensoren, Laserscanner oder dergleichen handeln. In dem vorliegenden Ausführungsbeispiel umfasst das Fahrerassistenzsystem 2 zwölf Ultraschallsensoren 6, von denen sechs in einem Frontbereich 8 und sechs in einem Heckbereich 9 des Kraftfahrzeugs 1 angeordnet sind. Die Ultraschallsensoren 6 können beispielsweise an den Stoßfängern des Kraftfahrzeugs 1 angeordnet sein. Mit den jeweiligen Ultraschallsensoren 6 kann ein Ultraschallsignal ausgesendet werden und das von dem Objekt 3 reflektierte Ultraschallsignal wieder empfangen werden. Es kann auch eine indirekte Messung durchgeführt werden, bei welcher einer der Ultraschallsensoren 6 das Ultraschallsignal aussendet und ein benachbarter Ultraschallsensor 6 das von dem Objekt 3 reflektierte Ultraschallsignal empfängt.

Darüber hinaus umfasst das Fahrerassistenzsystem 2 eine Kamera 7, mittels welcher das Objekt 3 erfasst werden kann. Der Kamera 7 kann einen Auswerteeinheit nachgeschaltet sein, mittels welcher die Bilder der Kamera 7 ausgewertet werden können. Das Objekt 3 kann beispielsweise mit einem entsprechenden Objekterkennungsalgorithmus erkannt werden. Die Ultraschallsensoren 6 und die Kamera 7 sind jeweils zur Datenübertragung mit der Steuereinrichtung 5 verbunden. Entsprechende Datenleitungen sind vorliegend der Übersichtlichkeit halber nicht dargestellt. Mit den Sensoren 6, 7 können jeweils Messungen durchgeführt werden, in denen Sensordaten erzeugt werden. Diese Sensordaten können dann von den jeweiligen Sensoren 6, 7 an die Steuereinrichtung 5 übertragen werden.

Die Steuereinrichtung 5 kann dann anhand der Sensordaten, die sie von einem der Sensoren 6, 7 empfangen hat, ein Objektmerkmal $x_P$, $x_L$, $x_U$ bestimmen, welches das Objekt 3 beschreibt. Es kann auch vorgesehen sein, dass die Sensoren 6, 7 die Objektmerkmale selbst bestimmen und dann an die Steuereinrichtung 5 übertragen. Das Bestimmen der Objektmerkmale $x_P$, $x_L$, $x_U$ kann in einer sogenannten Merkmalsextraktionsebene erfolgen. Hierbei können Messwerte der Sensordaten gleichartiger Sensoren kombiniert oder zusammengelegt werden. Die Objektmerkmale $x_P$, $x_L$, $x_U$ können beispielsweise in eine digitale Umgebungskarte, welche die Umgebung 4 des Kraftfahrzeugs 1 beschreibt, eingetragen werden. Die extrahierten Objektmerkmale $x_P$, $x_L$, $x_U$, welche von verschiedenartigen Sensoren stammen, können erst in der Umgebungskarte bzw. der Merkmalsextraktionsebene fusioniert werden. Bei den Objektmerkmalen $x_P$, $x_L$, $x_U$ kann es sich um Punktmerkmale $x_P$, Linienmerkmale $x_L$ oder unscharfe Merkmale $x_U$ handeln.

Diese Objektmerkmale $x_P$, $x_L$, $x_U$ können in der Umgebungskarte aktualisiert werden. Dazu können neuen Objektmerkmale $x_P$, $x_L$, $x_U$ bestimmt werden. Wenn bereits ein Objektmerkmal $x_P$, $x_L$, $x_U$ in der Umgebungskarte vorhanden ist und ein neues Objektmerkmal $x_P$, $x_L$, $x_U$ bestimmt wird, kann zunächst überprüft werden, ob das neue Objektmerkmal $x_P$, $x_L$, $x_U$ dem in der Umgebungskarte vorhandenen Objektmerkmal $x_P$, $x_L$, $x_U$ zugeordnet werden kann. Wenn die Objektmerkmale $x_P$, $x_L$, $x_U$ einander zugeordnet werden, können die Objektmerkmale $x_P$, $x_L$, $x_U$ zusammengelegt werden. Falls keine Zuordnung erfolgt, kann das neue Objektmerkmal x$_P$, x$_L$, x$_U$ in die Umgebungskarte aufgenommen werden.

Die Objektmerkmale x$_P$, x$_L$, x$_U$ können aus den Sensordaten der Ultraschallsensoren 6 bestimmt werden. Anhand der Sensordaten der Ultraschallsensoren 6 kann ein Abstand zu dem Objekt 3 bestimmt werden. Hierzu sendet ein Ultraschallsensor 6 ein Ultraschallsignal aus und empfängt das von dem Objekt 3 reflektierte Ultraschallsignal wieder. Anhand der Laufzeit zwischen dem Aussenden des Ultraschallsignals und dem Empfangen des von dem Objekt 3 reflektierten Ultraschallsignals 3 kann dann der Abstand bestimmt werden. Falls das Fahrerassistenzsystem 2 - wie in dem Beispiel von Fig. 1 gezeigt - mehre Ultraschallsensoren 6 aufweist, können mit den Ultraschallsensoren 6 direkte und indirekte Messungen durchgeführt werden.

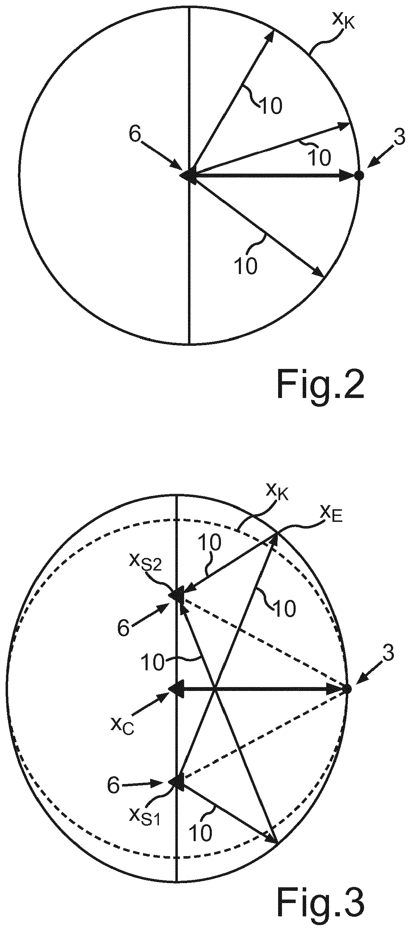

Eine direkte Messung des Ultraschallsensors 6 ist dabei schematisch in Fig. 2 dargestellt. Bei einer direkten Messung sendet der Ultraschallsensor 6 das Ultraschallsignal bzw. das Sensorsignal aus und empfängt auch das von dem Objekt 3 reflektierte Ultraschallsignal bzw. das Echo des Ultraschallsignals wieder. Aus der Laufzeit des Ultraschallsignals kann dann bestimmt werden, dass das Objekt 3 auf einem Kreis x$_K$ bzw. Halbkreis um den Ultraschallsensor 6 herum liegt. Der Radius des Kreises x$_K$ ergibt sich aus der Hälfte der Laufzeit des Ultraschallsignals. Die Pfeile 10 beschreiben dabei die Signalwege des Sensorsignals bzw. des Ultraschallsignals.

Eine indirekte Messung des Ultraschallsensors 6 ist schematisch in Fig. 3 veranschaulicht. Hierbei wird ein erster Ultraschallsensor 6 als Sender betrieben. Dieser Ultraschallsensor 6 befindet sich an einer Position x$_{s1}$ und sendet das Ultraschallsignal aus. Ein zweiter bzw. benachbarter Ultraschallsensor 6, der sich an einer Position x$_{s2}$ befindet, wird als Empfänger betrieben und empfängt das von dem Objekt 3 reflektierte Ultraschallsignal, welches von dem ersten Ultraschallsensor 6 ausgesendet wurde. Hierbei liegt das Objekt 3 auf einer Ellipse x$_E$ bzw. Halbellipse, wobei die Positionen x$_{s1}$, x$_{s2}$ der Ultraschallsensoren 6 jeweiligen Brennpunkten x$_{F1}$ und x$_{F2}$ der Ellipse x$_E$ zugeordnet sind.

Wie bereits erläutert, können als Objektmerkmale x$_P$, x$_L$, x$_U$ Punktmerkmale x$_P$ oder Linienmerkmale x$_L$ durch die Kombination von Sensordaten, die in mehreren Messungen von den Ultraschallsensoren 6 erzeugt wurden, bestimmt werden. In einigen Fällen ist es jedoch nicht möglich, ein Objektmerkmal x$_P$, x$_L$, x$_U$ mit einer expliziten räumlichen Position zu bestimmten. Dies ist beispielsweise der Fall, wenn nicht ausreichend Sensordaten zur Verfügung stehen. In diesem Fall wird als das Objektmerkmal x$_P$, x$_L$, x$_U$ ein unscharfes Merkmal x$_U$ bereitgestellt. Bei einer direkten Messung wird dies dadurch beschrieben, dass ein Punkt auf der Sensorachse mit dem gemessenen Abstand von der Sensorposition platziert wird. Bei einer indirekten Messung wird die Ellipse durch einen Kreis angenähert, dessen Mittelpunkt x$_C$ der Mittelwert der beiden Sensorpositionen x$_{s1}$, x$_{s2}$ ist. Dieser Mittelpunkt x$_C$ wird auch als virtuelle Sensorposition bezeichnet. Der Radius des Kreises entspricht der Länge der kleinen Halbachse b der Ellipse. Dies kann wie folgt beschrieben werden:

$$\text{Radius} = \sqrt{\left(\frac{\text{Laufzeitabstand}}{2}\right)^2 - \left(\frac{\text{Sensorabstand}}{2}\right)^2}.$$

In ähnlicher Weise wird das unscharfe Merkmal x$_u$ auf der Achse des virtuellen Sensors unter Verwendung des berechneten Radius erzeugt. Auch wenn es nicht möglich ist, anhand der Sensordaten Punktmerkmale x$_P$ oder Linienmerkmale x$_L$ zu bestimmen, kann es vorgesehen sein, ein Punktmerkmal x$_P$ oder ein Linienmerkmal x$_L$ mit einem unscharfen Merkmal x$_U$ zusammenzulegen.

Punktmerkmale x$_P$, Linienmerkmale x$_L$ und unscharfe Merkmale x$_U$ werden als Gaußsche Zufallsvariablen $x$ mit dem Erwartungswert E[$x$] = $\hat{x}$ und der Kovarianzmatrix Cov[$x$] = E[($x$ - $\hat{x}$)($x$ - $\hat{x}$)$^T$] = $P$ beschrieben. Demnach wird ein Punktmerkmal $x_P = (x_p, y_p)^T$ durch seine zweidimensionalen Koordinaten im Raum dargestellt. Ein Linienmerkmal $x_L = (x_l, y_l, \alpha_l)^T$ wird durch einen Basispunkt bzw. Drehpunkt im zweidimensionalen Raum und einem Winkel $\alpha_l$ der Linie beschrieben. Vorliegend wird die Länge der Linie stochastisch nicht modelliert. Schließlich wird ein unscharfes Merkmal x$_u$ durch eine skalare Zufallsvariable $x_U = d_u$ beschrieben, wobei $d_u$ seine euklidische Distanz von der tatsächlichen oder virtuellen Sensorposition $x_S = (x_s, y_s)^T$ ist.

Um die Objektmerkmale x$_P$, x$_L$, x$_U$ zusammenzulegen, wird eine Abbildungsfunktion in Form eines generischen, linearen Schätzers verwendet:

$$x_1' = x_1 + K\text{h}(x_1, x_2).$$

Hierbei können $x_1$ und $x_2$ durch die oben beschriebenen Objektmerkmale x$_P$, x$_L$, x$_U$, also ein Punktmerkmal x$_P$, ein Linienmerkmal x$_P$ oder ein unscharfes Merkmal x$_U$ ersetzt werden. Hierzu wird nachfolgend insbesondere das Zusammenlegen eines Punktmerkmals x$_P$ mit einem unscharfen Merkmal x$_U$ oder das Zusammenlegen eines Linienmerkmals $x_L$ mit einem unscharfen Merkmal $x_U$ beschrieben. Durch die Abbildungsvorschrift werden zwei Objektmerkmale $x_P$, $x_L$, $x_U$ kombiniert, um weitere Informationen über das bereits vorhandene Objektmerkmal $x_P$, $x_L$, $x_U$ zu erhalten. Mit Hilfe der Abbildungsvorschrift kann aus dem ersten Zustand $x_1$ bzw. dem ersten Objektmerkmal $x_P$, $x_L$, $x_U$ ein zusammengelegtes Objektmerkmal bzw. ein zusammengelegter Zustand $x_1'$ bestimmt werden. Zu diesem Zweck wird eine stochastische Innovationsfunktion $h(x_1, x_2)$ verwendet.

Die Innovationsfunktion h beschreibt eine Ähnlichkeit zwischen den Objektmerkmalen $x_P$, $x_L$, $x_U$ bzw. deren Zuständen. Die Abbildungsvorschrift bzw. die Innovationsfunktion h kann auch nicht linear sein. In diesem Fall kann die Innovationsfunktion h dann linearisiert werden. Dies kann mit Hilfe einer Taylor-Reihe der ersten Ordnung erfolgen:

$$h(x_1, x_2) = h(\widehat{x_1}, \widehat{x_2}) + \frac{\partial h}{\partial x_1}\bigg|_{(x_1, x_2) = (\widehat{x_1}, \widehat{x_2})} (x_1 - \widehat{x_1}) + \frac{\partial h}{\partial x_2}\bigg|_{(x_1, x_2) = (\widehat{x_1}, \widehat{x_2})} (x_2 - \widehat{x_2})$$
$$= h(\widehat{x_1}, \widehat{x_2}) + H_1(x_1 - \widehat{x_1}) + H_2(x_2 - \widehat{x_2}).$$

Dabei sind die Faktoren $H_1$ und $H_2$ die Jacobi-Matrizen. Des Weiteren umfasst die Abbildungsvorschrift einen Verstärkungsfaktor K bzw. eine Verstärkungsmatrix. Der Verstärkungsfaktor K wird dadurch bestimmt, dass die Projektion $e^T P_1' e$ minimiert wird, wobei e jeder beliebige Einheitsvektor sein kann. Der Verstärkungsfaktor K kann wie folgt beschrieben werden:

$$K = -P_1 H_1^T (H_1 P_1 H_1^T + H_2 P_2 H_2^T)^{-1}.$$

Vorliegend wird berücksichtigt, dass $x_1$ und $x_2$ nicht korreliert sind. Damit ergibt sich $E[(x_1 - \hat{x}_1)(x_2 - \hat{x}_2)^T] = 0$. Somit ergibt sich das zusammengelegte Ergebnis und die aktualisierte Kovarianzmatrix zu:

$$\hat{x}_1' = \hat{x}_1 + K h(\widehat{x_1}, \widehat{x_2})$$

$$P_1' = P_1 + K H_1 P_1.$$

Um zu überprüfen, ob die Objektmerkmale $x_P$, $x_L$, $x_u$ bzw. die Zustände einander zuzuordnen sind, wird die sogenannte Mahalanobis-Distanz definiert:

$$h(\widehat{x_1}, \widehat{x_2})^T (H_1 P_1 H_1^T + H_2 P_2 H_2^T)^{-1} h(\widehat{x_1}, \widehat{x_2}).$$

Durch die Mahalanobis-Distanz wird eine Grenze vorgegeben. Falls diese Grenze unterschritten wird, ist eine Zuordnung der Zustände bzw. Objektmerkmale $x_P$, $x_L$, $x_U$ plausibel. Zudem können weitere geometrische Untersuchungen herangezogen werden, um die Plausibilität zu prüfen.

Um zu überprüfen, ob die Objektmerkmale $x_P$, $x_L$, $x_u$ einander zugeordnet und zusammengelegt werden sollen, ist eine geeignete Innovationsfunktion h für die Objektmerkmale $x_P$, $x_L$, $x_U$ zu bestimmen. Nachfolgend werden Modelle für das Zusammenlegen von Punktmerkmalen $x_P$ mit unscharfen Merkmalen $x_U$ und das Zusammenlegen von Linienmerkmalen $x_L$ mit unscharfen Merkmalen $x_U$ erläutert. Beiden Modelle werden als die Differenz zwischen einem Messmodell $a_P$, $a_L$ und einem gemessenen Objektabstand $d_u$ des unscharfen Merkmals $x_U$ bestimmt. Die Messmodelle $a_P$, $a_L$ können bereits bekannte Objektmerkmale $x_P$, $x_L$ in einen Messraum überführen. In diesem Messraum können die Objektmerkmale $x_P$, $x_L$, $x_U$ dann mit den aktuellen Messungen verglichen werden.

Wenn ein Punktmerkmal $x_P$ mit einem unscharfen Merkmal $x_U$ zusammengelegt werden soll, ist das Messmodell $a_P$ der Euklidsche Abstand $d_P$ zwischen dem Punktmerkmal $x_P$ und der Sensorposition $x_s$. Die Innovationsfunktion h ergibt sich zu:

$$h(x_P, x_U) = d_P(x_P) - d_u = \sqrt{(x_p - x_s)^2 + (y_p - y_s)^2} - d_u$$

$$H_{x_P} = \left[ \frac{\widehat{x_p} - x_s}{\sqrt{(\widehat{x_p} - x_s)^2 + (\widehat{y_p} - y_s)^2}} \quad \frac{\widehat{y_p} - y_s}{\sqrt{(\widehat{x_p} - x_s)^2 + (\widehat{y_p} - y_s)^2}} \right]$$

$$H_{x_U} = -1.$$

Wenn ein Linienmerkmal $x_L$ mit einem unscharfen Merkmal $x_U$ zusammengelegt werden soll, ist das Messmodell $a_L$ der absolute Wert des kürzesten Abstands $d_L$ zwischen dem Linienmerkmal $x_L$ und der Sensorposition $x_S$. Die Innovationsfunktion h ergibt sich zu:

$$h(x_L, x_U) = d_L(x_L) - d_u = \left| \underbrace{-\sin \alpha_l (x_l - x_s) + \cos \alpha_l (y_l - y_s)}_{s} \right| - d_u$$

$$H_{x_L} = \text{sign}(\hat{s})[-\sin \hat{\alpha}_l \quad \cos \hat{\alpha}_l \quad -\cos \hat{\alpha}_l (\hat{x}_l - x_s) - \sin \hat{\alpha}_l (\hat{y}_l - y_s)]$$

$$H_{x_U} = -1.$$

Eine grafische Beschreibung der beiden Innovationsfunktionen h wird nachfolgend näher erläutert.

Wie zuvor beschrieben, werden unscharfe Merkmale $x_U$ als kreisförmige Abstandsmessungen mit dem Abstand $d_u$ von einer Sensorposition $x_s$ beschreiben. Dieses Modell wird unabhängig von der Art der Messung verwendet, durch welche das unscharfe Merkmal erzeugt wird. Bei einer direkten Messung mit einem Ultraschallsensor 6 beschreibt dieses Modell die vorhandenen Informationen bezüglich des Signalwegs. Für indirekte Messungen mit dem Ultraschallsensor 6 stellt ein solches Modell nur eine Annäherung dar, deren Genauigkeit davon abhängt, wie ähnlich die Ellipse zu einem Kreis ist. Um diese Einschränkung zu beheben, wird zunächst die Beschreibung eines unscharfen Merkmals $x_U$ erweitert, um auch Informationen aus einer indirekten Messung speichern zu können. Des Weiteren wird die Innovationsfunktion h bestimmt, um Punktmerkmale $x_P$ und Linienmerkmale $x_L$ mit unscharfen Merkmalen $x_U$ in Form der elliptischen Abstandsmessungen zusammenführen zu können.

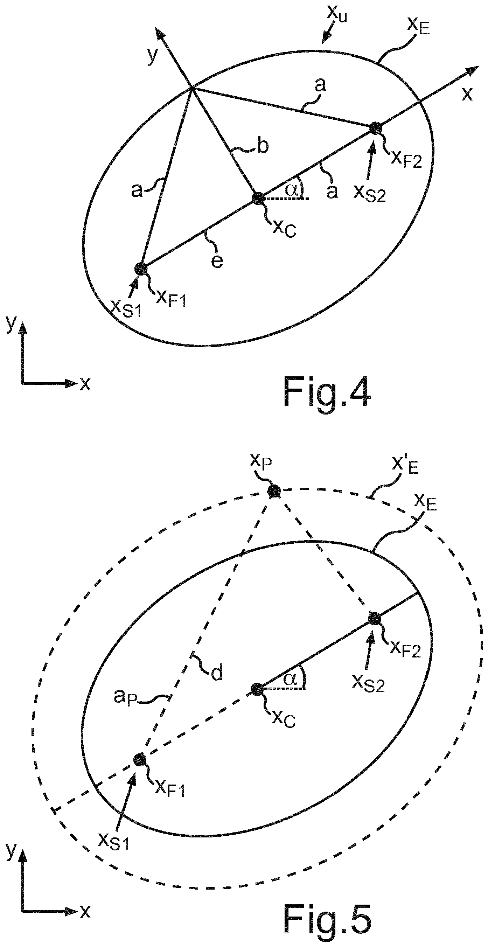

Fig. 4 zeigt eine schematische Darstellung einer Ellipse $x_E$ als unscharfes Merkmal $x_U$. Eine Ellipse $x_E$ kann mathematisch auf unterschiedlich Weise beschrieben werden. Eine übliche Beschreibung ist es, eine Ellipse $x_E$ als Punktemenge anzusehen, deren Summe der Euklidschen Abstände zu den beiden Brennpunkten $x_{F1} = (x_{f1}, y_{f1})^T$ und $x_{F2} = (x_{f2}, y_{f2})^T$ der Länge der großen Hauptachse $2a$ entspricht:

$$E = \{x | \overline{xx_{F1}} + \overline{xx_{F2}} = 2a\}.$$

Der Vorteil dieser Beschreibung ist, dass diese unabhängig von jedem kartesischen Koordinatensystem ist. Zudem kann die Ellipse $x_E$ durch die implizite Ellipsengleichung unter Verwendung der großen Halbachse a und der kleinen Halbachse b beschrieben werden:

$$\frac{(x^e)^2}{a^2} + \frac{(y^e)^2}{b^2} - 1 = 0.$$

Diese Gleichung ist in dem Koordinatensystem der Ellipse $x_E$ beschrieben, in welchem die x-Achse an der großen Halbachse a und die y-Achse an der kleinen Halbachse b orientiert ist. Die Ellipse $x_E$ ist dabei im einem Winkel $\alpha$ geneigt. Eine weitere Eigenschaft der Ellipse $x_E$ ist die sogenannte lineare Exzentrizität e:

$$e = \sqrt{a^2 - b^2}.$$

Die lineare Exzentrizität e beschreibt den Abstand zwischen jedem Brennpunkt $x_{F1}$, $x_{F2}$ und dem Mittelpunkt

$x_c = (x_c, y_c)^T$ der Ellipse $x_E$. Die lineare Exzentrizität e wird begrenzt durch $0 \le e < a$. Für den Fall e = 0, dass die Exzentrizität 0 ist, wäre die Ellipse $x_E$ ein Kreis. Wenn e = a gilt, würde die Ellipse $x_E$ zu einer Linie degenerieren.

Um eine erweiterte Beschreibung eines unscharfen Merkmals $x_U$ zu erlagen, müssen aus der Merkmalextraktionsschicht alle verfügbaren Informationen zu der indirekten Messung der Ultraschallsensoren 6 an die digitale Umgebungskarte übertragen werden. Beispielsweise müssen die Positionen $x_S$ der beiden Ultraschallsensoren 6 und die Informationen zur Laufzeit des Ultraschallsignals bekannt sein. Aus der Laufzeit kann dann die Länge der großen Halbachse a bestimmt werden: a = Laufzeitabstand/2. Aus dem Abstand der Ultraschallsensoren 6 kann die Exzentrizität e bestimmt werden: e = Sensorabstand/2. Hieraus kann dann die Länge der kleinen Halbachse b bestimmt werden:

$$b = \sqrt{a^2 - e^2}$$ , wobei die Länge b der kleinen Halbachse bei der Fusion nicht benötigt wird.

Dabei wird davon ausgegangen, dass der Abstand zwischen den Ultraschallsensoren 6 bzw. der Sensorabstand vollständig bekannt ist. Dieser kann beispielsweise in einem Speicher der Steuereinrichtung 5 hinterlegt sein. Die Unsicherheit der Messung spiegelt sich in der Länge der großen Halbachse a und der Länge der kleinen Halbachse b wider. Da die Längen der beiden Halbachse a, b voneinander und von der linearen Exzentrizität e abhängig sind, wird die Unsicherheit der Ellipse $x_E$ vollständig durch die Betrachtung einer einzelnen skalaren Zufallsvariablen a oder b für die Halbachsen wiedergegeben. Da mit den Ultraschallsensoren $\hat{a}$ direkt gemessen wird, wird ein unscharfes Merkmal $x_U$ stochastisch durch die Länge der großen Halbachse a bestimmt. Hieraus ergibt sich $x_U = a_u$, wobei $a_u$ als Gauß-Kurve modelliert wird. Darüber hinaus werden entweder beide Sensorpositionen $x_S$, welche durch die Brennpunkte $x_{F1}$ und $x_{F2}$ beschrieben sind, oder eine Zusammenstellung aus dem Mittelpunkt $x_C$ der Ellipse, der linearen Exzentrizität e und die Orientierung $\alpha$ der Ellipse $x_E$ benötigt, um das unscharfe Merkmal eindeutig zu spezifizieren.

Zur Bestimmung der Zuordnung und des Zusammenlegens sind zwei

Innovationsfunktionen $h(x_P, x_U)$ und $h(x_L, x_U)$ zu bestimmen, mit denen Punktmerkmale $x_P$ und Linienmerkmalen $x_L$ mit unscharfen Merkmalen $x_U$ zusammengelegt werden können. Die Innovationsfunktionen h werden so bestimmt, dass diese einen Unterschied zwischen einem Messmodell $a(x)$ und der großen Halbachse a der gemessenen Ellipse $x_E$ berücksichtigen:

$$h(x, x_U) = h(x, a_u) = a(x) - a_u.$$

Hierbei kann der Zustand x durch den Zustand eines Punktmerkmals $x_P$ oder den Zustand eines Linienmerkmals $x_L$ ersetzt werden. Das Messmodell $a_P(x_P)$ kann die Länge der großen Halbachse a einer generierten Ellipse $x'_E$ bestimmen, auf der das Punktmerkmal $x_P$ liegen würde, wenn er mit dem Ultraschallsensor 6 oder mehreren Ultraschallsensoren 6 gemessen wird. Wenn ein Linienmerkmal $x_L$ mit dem unscharfen Merkmal $x_U$ zusammengelegt werden soll, bestimmt das Messmodell $a_L(x_L)$ die Länge der großen Halbachse a der generierten Ellipse $x_E$, zu welcher das Linienmerkmal $x_L$ tangential verlaufen würde. Dabei kann berücksichtigt werden, dass das Linienmerkmal $x_L$ aus einer Messung mit den gleichen Ultraschallsensoren 6 bestimmt wurde, aus deren Messung auch das unscharfe Merkmal $x_U$ bestimmt wurde.

Nachfolgend wird die Bestimmung der Messmodelle für die Punktmerkmale $x_P$ und Linienmerkmale $x_L$ erläutert. Die Bestimmung des Messmodells ap für das Zusammenlegen des Punktmerkmals $x_P$ mit der Ellipse $x_E$ wird anhand von Fig. 5 erläutert, welche eine schematische Darstellung des Punktmerkmals $x_P$ und der Ellipse $x_E$ zeigt. Bei einem Punktmerkmal $x_P$ wird das Messmodell aus folgender Definition abgeleitet:

$$\overline{x_P x_{F1}} + \overline{x_P x_{F2}} = 2a.$$

Zum Bestimmen des Messmodells $a_P$ wird vorliegend die generierte Ellipse $x'_E$ bestimmt. Diese generierte Ellipse $x'_E$ wird so bestimmt, dass das Punktmerkmal $x_P$ auf der generierten Ellipse $x'_E$ liegt. Hieraus kann die Länge der großen Halbachse a der generierten Ellipse $x'_E$ bestimmt werden:

$$a = \frac{\overline{x_P x_{F1}} + \overline{x_P x_{F2}}}{2} = \frac{\sqrt{(x_{f1} - x_p)^2 + (y_{f1} - y_p)^2} + \sqrt{(x_{f2} - x_p)^2 + (y_{f2} - y_p)^2}}{2}.$$

Dies gilt für a > e. Wenn die Bedingung a = e erfüllt ist, liegt das Punktmerkmal $x_P$ auf der Linie, welche die Brennpunkte $x_{F1}$, $x_{F2}$ miteinander verbindet. In diesem Fall kann keine gültige Messung aus dem Punktmerkmal $x_P$ abgeleitet werden. Für alle anderen Punktmerkmale $x_P$ können gültige Ellipsen bestimmt werden. Das Messmodell $a_P$

ergibt sich aus der Hälfte der Strecke, welche von dem ersten Brennpunkt $x_{F1}$ über das Punktmerkmal $x_P$ zu dem zweiten Brennpunkt $x_{F2}$ verläuft.

Dieses Modell wird für die Innovationsfunktion h verwendet:

$$\mathrm{h}(x_P, x_U) = a_P(x_P) - a_u$$

$$= \frac{\sqrt{(x_{f1} - x_p)^2 + (y_{f1} - y_p)^2} + \sqrt{(x_{f2} - x_p)^2 + (y_{f2} - y_p)^2}}{2} - a_u.$$

Nach der Linearisierung der Innovationsfunktion h können die Jacobi-Matrizen $H_{x_P}$ und $H_{x_u}$ bestimmt werden:

$$H_{x_P} = \frac{1}{2} \left[ \frac{\widehat{x_p} - x_{f1}}{\widehat{x_P} x_{F1}} + \frac{\widehat{x_p} - x_{f2}}{\widehat{x_P} x_{F2}} \quad \frac{\widehat{y_p} - y_{f1}}{\widehat{x_P} x_{F1}} + \frac{\widehat{y_p} - y_{f2}}{\widehat{x_P} x_{F2}} \right]$$

$$H_{x_U} = -1.$$

Die Jacobi-Matrix $H_{x_P}$ ist definiert für alle Punkte außer $\widehat{x_P} = x_{F1}$ oder $\widehat{x_P} = x_{F2}$. Dieses kann aber nicht vorkommen, wenn gilt, dass $a_P(\widehat{x_P}) > e$.

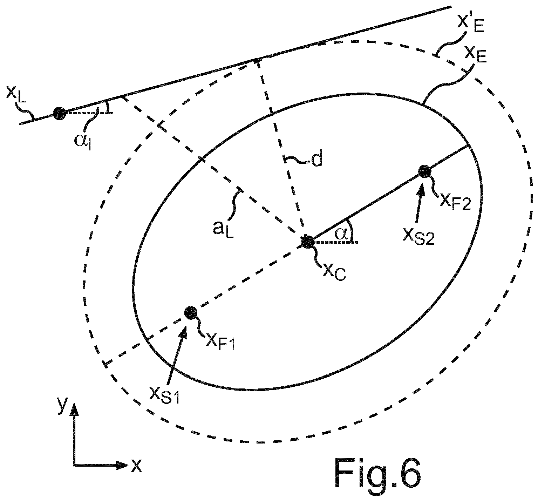

Die Bestimmung des Messmodells $a_L$ für das Zusammenlegen des Linienmerkmals $x_L$ mit der Ellipse $x_E$ wird anhand von Fig. 6 erläutert, welche eine schematische Darstellung des Linienmerkmals $x_L$ und der Ellipse $x_E$ zeigt. Das Messmodell $a_L$ für ein Linienmerkmal $x_L$ kann bestimmt werden, indem das Linienmerkmal $x_L$ mit der generierten Ellipse x'$_E$ geschnitten wird. Eine indirekte Messung mit Ultraschallsensoren von einem realen Objekt in Form einer Linie würde eine elliptische Messung ergeben, welche tangential zu der Linie verläuft. Dies bedeutet, dass die Linie bzw. das Linienmerkmal $x_L$ tangential zu der generierten Ellipse x'$_E$ verlaufen muss. In einem ersten Schritt, wird die Lösung aus einem Linienmerkmal $x_L$ hergeleitet, das in dem lokalen Koordinatensystem der generierten Ellipse x'$_E$ vorliegt. Danach kann das Messmodell $a_L$ erweitert werden, so dass Linienmerkmale $x_L$ in jedem kartesischen Koordinatensystem verwendet werden können.

Um die Schnittpunkte zu bestimmen, wird die Linie bzw. das Linienmerkmal $x_L$ in der expliziten Parameterform beschrieben:

$$\begin{bmatrix} x^e \\ y^e \end{bmatrix} = \begin{bmatrix} x_l^e \\ y_l^e \end{bmatrix} + t \begin{bmatrix} \cos \alpha_l^e \\ \sin \alpha_l^e \end{bmatrix}.$$

Diese wird in die implizite Ellipsen-Gleichung eingesetzt:

$$0 = \frac{(x^e)^2}{a^2} + \frac{(y^e)^2}{b^2} - 1$$

$$0 = \frac{(x_l^e + t \cos \alpha_l^e)^2}{a^2} + \frac{(y_l^e + t \sin \alpha_l^e)^2}{b^2} - 1.$$

Die Gleichung wird für einen Parameter t gelöst, da hieraus die Schnittpunkte abgeleitet werden können. Da die Gleichung quadratisch ist, wird sie in die Form der allgemeinen quadratischen Gleichung gebracht. Danach wird gelöst:

$$0 = t^2 + 2 \underbrace{\frac{b^2 x_l^e \cos \alpha_l^e + a^2 y_l^e \sin \alpha_l^e}{b^2 (\cos \alpha_l^e)^2 + a^2 (\sin \alpha_l^e)^2}}_{p} t + \underbrace{\frac{b^2 (x_l^e)^2 + a^2 (y_l^e)^2 - a^2 b^2}{b^2 (\cos \alpha_l^e)^2 + a^2 (\sin \alpha_l^e)^2}}_{q}$$

$$t_{1,2} = -p \pm \sqrt{p^2 - q}.$$

Um eine eindeutige Lösung zu erhalten, muss die Diskriminante 0 sein:

$$0 = p^2 - q.$$

Diese Vorgabe kann für *a* dadurch gelöst warden, dass *p* und *q* eingesetzt werden und $b^2 = a^2 - e^2$ ersetzt wird durch:

$$a^2 = \underline{(x_l^e \sin \alpha_l^e - y_l^e \cos \alpha_l^e)^2 + (e \cos \alpha_l^e)^2}$$

$$a = \sqrt{(x_l^e \sin \alpha_l^e - y_l^e \cos \alpha_l^e)^2 + (e \cos \alpha_l^e)^2}.$$

Diese Lösung zur Berechnung der Länge der großen Halbachse a gilt für Linienmerkmale $x_L$, welche in dem lokalen Koordinatensystem der Ellipse $x_E$ definiert sind. Daher muss im Allgemeinen das Linienmerkmal $x_L$ in das lokale Koordinatensystem der Ellipse $x_E$ transformiert werden:

$$\begin{bmatrix} x_l^e \\ y_l^e \end{bmatrix} = \begin{bmatrix} \cos \alpha & -\sin \alpha \\ \sin \alpha & \cos \alpha \end{bmatrix}^T \begin{bmatrix} x_l - x_c \\ y_l - y_c \end{bmatrix}$$

$$\alpha_l^e = \alpha_l - \alpha.$$

Durch einsetzten der Transformationen in die Lösung ergibt sich:

$$a = \sqrt{\left( \begin{bmatrix} \sin(\alpha_l - \alpha) & -\cos(\alpha_l - \alpha) \end{bmatrix} \begin{bmatrix} \cos \alpha & -\sin \alpha \\ \sin \alpha & \cos \alpha \end{bmatrix}^T \begin{bmatrix} x_l - x_c \\ y_l - y_c \end{bmatrix} \right)^2 + (e \cos(\alpha_l - \alpha))^2}.$$

Schließlich wird der Reihenvektor umgeschrieben zu:

$$\begin{bmatrix} \sin(\alpha_l - \alpha) & -\cos(\alpha_l - \alpha) \end{bmatrix} = \begin{bmatrix} \sin \alpha_l \cos \alpha - \cos \alpha_l \sin \alpha & -\sin \alpha_l \sin \alpha - \cos \alpha_l \cos \alpha \end{bmatrix}$$
$$= \begin{bmatrix} \sin \alpha_l & -\cos \alpha_l \end{bmatrix} \begin{bmatrix} \cos \alpha & -\sin \alpha \\ \sin \alpha & \cos \alpha \end{bmatrix}$$

und ebenfalls eingesetzt. Dies führt zu:

$$a = \sqrt{\left( \begin{bmatrix} \sin \alpha_l & -\cos \alpha_l \end{bmatrix} \underbrace{\begin{bmatrix} \cos \alpha & -\sin \alpha \\ \sin \alpha & \cos \alpha \end{bmatrix} \begin{bmatrix} \cos \alpha & -\sin \alpha \\ \sin \alpha & \cos \alpha \end{bmatrix}^T}_{I} \begin{bmatrix} x_l - x_c \\ y_l - y_c \end{bmatrix} \right)^2 + (e \cos(\alpha_l - \alpha))^2}$$
$$= \sqrt{\left( \sin \alpha_l (x_l - x_c) - \cos \alpha_l (y_l - y_c) \right)^2 + (e \cos(\alpha_l - \alpha))^2}.$$

Es sei darauf hingewiesen, dass eine Drehung der Kippstellung des Linienmerkmals $x_L$ in dem ersten Term völlig verschwindet und dass in dem zweiten Term nur eine Winkeltransformation erforderlich ist. Eine Drehung des Punktmerkmals $x_P$ ist nicht erforderlich, da der erste Ausdruck das Quadrat des kürzesten Abstands zwischen dem Linienmerkmal $x_L$ und dem Mittelpunkt $x_C$ der Ellipse $x_E$ ist und dies invariant ist. Die erhaltene Lösung ist nur gültig, wenn gilt *a* > *e*. Wenn diese Bedingung nicht gilt, schneidet sich das Linienmerkmal $x_L$ mit dem Liniensegment zwischen den beiden Brennpunkten $x_{F1}$, $x_{F2}$. In diesem Fall kann keine korrekte Ellipse $x_E$ aus dem Linienmerkmal $x_L$ hergeleitet werden.

Geometrisch gesprochen wird das Messmodell $a_L$ durch die Projektion eines der Brennpunkte $x_{F1}$, $x_{F2}$ auf das Linienmerkmal $x_L$ und der Berechnung ihres euklidischen Abstands d zu dem Mittelpunkt $x_C$ der Ellipse $x_E$ bestimmt. Mit diesem Ansatz kann leicht gezeigt werden, dass die Bedingung $a = e$ eingehalten wird, falls das Linienmerkmal $x_L$ auf einem oder beiden Brennpunkten $x_{F1}$, $x_{F2}$ liegt.

Die oben beschriebene Lösung wird für die Innovationsfunktion h verwendet, welche wie folgt beschrieben wird:

$$h(x_L, x_U) = a_L(x_L) - a_u$$

$$= \sqrt{\underbrace{\left(\sin\alpha_l\,(x_l - x_c) - \cos\alpha_l\,(y_l - y_c)\right)^2}_{s_1} + \underbrace{\left(e\cos(\alpha_l - \alpha)\right)^2}_{s_2}} - a_u.$$

Ferner werden die Jacobi-Matrizen bestimmt:

$$H_{x_L} = \frac{1}{a_L(\widehat{x_L})}\left[\widehat{s_1}\sin\widehat{\alpha_l} \quad -\widehat{s_1}\cos\widehat{\alpha_l} \quad \widehat{s_1}\left(\cos\widehat{\alpha_l}\,(\widehat{x_l} - x_c) + \sin\widehat{\alpha_l}\,(\widehat{y_l} - y_c)\right) - \widehat{s_2}e\sin(\widehat{\alpha_l} - \alpha)\right]$$

$$H_{x_U} = -1.$$

Die Jacobi-Matrix $H_{x_L}$ ist definiert für alle Fälle außer $a_L(\widehat{x_L}) = 0$. In diesem Fall ist das Linienmerkmal $x_L$ senkrecht zu der Hauptachse der Ellipse $x_E$ und verläuft durch den Mittelpunkt $x_C$ der Ellipse $x_E$. Dieser Fall wurde bereits durch die Vorgabe $a_L(\widehat{x_L}) > e$ ausgeschlossen.

Schließlich wird gezeigt, dass die bestimmten Innovationsfunktionen h für die Ellipsen $x_E$ einer Verallgemeinerung der bereits bestehenden Modelle für Kreise ist. Für den speziellen Fall eines Kreises, für den gilt: $e = 0$ oder $x_{F1}$ = $x_{F2}$ = $x_C$ = $x_S$, sind die zuvor bestimmten Messmodelle mathematisch gleich:

$$a_P(x_P) = \frac{\overline{x_P x_S} + \overline{x_P x_S}}{2} = \overline{x_P x_S}$$

$$= \sqrt{\left(x_p - x_s\right)^2 + \left(y_p - y_s\right)^2} = d_P(x_P)$$

$$a_L(x_L) = \sqrt{\left(\sin\alpha_l\,(x_l - x_s) - \cos\alpha_l\,(y_l - y_s)\right)^2}$$

$$= \left|\sin\alpha_l\,(x_l - x_s) - \cos\alpha_l\,(y_l - y_s)\right|$$

$$= \left|-\sin\alpha_l\,(x_l - x_s) + \cos\alpha_l\,(y_l - y_s)\right| = d_L(x_L).$$

Es sei angemerkt, dass die Normale des bestehenden Messmodells für Linien in entgegengesetzte Richtung zeigt.

Vorliegend wurde eine indirekte Messung anhand von Ultraschallsensoren 6 erläutert. Es kann auch vorgesehen sein, dass die Sensordaten von weiteren Sensoren des Kraftfahrzeugs 1 genutzt werden. Beispielsweise können aus den Messungen der Kamera 7 Objektmerkmale erzeugt werden und in die Umgebungskarte eingetragen werden. Auf diese Weise kann das Objekt 3 zuverlässig erfasst werden.

**Patentansprüche**

1. Verfahren zum Erfassen zumindest eines Objekts (3) in einer Umgebung (4) eines Kraftfahrzeugs (1), bei welchem ein erster Sensor (6) zum Aussenden eines Sensorsignals angesteuert wird, von einem zweiten Sensor (6) Sensordaten empfangen werden, welche das von dem zumindest einen Objekt (3) reflektierte Sensorsignal beschreiben, aus den Sensordaten ein unscharfes Merkmal ($x_U$) als Objektmerkmal ($x_P$, $x_L$, $x_U$) zur Beschreibung des zumindest einen Objekts (3) bestimmt wird, wobei das unscharfe Merkmal ($x_U$) einen Abstand zwischen dem zumindest einen Objekt (3) und dem ersten Sensor (6) und einen Abstand zwischen dem zumindest einen Objekt (3) und dem zweiten Sensor (6) beschreibt, wobei der erste Sensor (6) und der zweite Sensor (6) Ultraschallsensoren sind und die Einbaupositionen des ersten Sensors (6) und des zweiten Sensors (6) bekannt sind, wobei das unscharfe Merkmal ($x_U$) als Ellipse ($X_E$) beschrieben wird und anhand von Sensordaten zumindest einer weiteren Messung des ersten und/oder des zweiten Sensors (6) ein weiteres Objektmerkmal ($x_P$, $x_L$) bestimmt wird, welches das zumindest eine Objekt (3) beschreibt,
**dadurch gekennzeichnet, dass**
das weitere Objektmerkmal ($x_P$, $x_L$) und das unscharfe Merkmal ($x_U$) mit einer Innovationsfunktion (h) in einen gemeinsamen Zustandsraum überführt werden, wobei die Innovationsfunktion (h) eine Ähnlichkeit zwischen dem unscharfen Merkmal ($x_U$) und dem weiteren Objektmerkmal ($x_P$, $x_L$) beschreibt, und ein zusammengelegtes Objektmerkmal aus dem weiteren Objektmerkmal ($x_P$, $x_L$) anhand der Innovationsfunktion (h) bestimmt wird.

2. Verfahren nach Anspruch 1,
**dadurch gekennzeichnet, dass**
Brennpunkte ($x_{F1}$, $x_{F2}$) der Ellipse ($x_U$) anhand einer Position ($x_{S1}$) des ersten Sensors (6) und einer Position ($x_{S2}$) des zweiten Sensors (6) bestimmt werden, eine Länge einer großen Halbachse (a) der Ellipse ($x_E$) anhand einer Laufzeit des Sensorsignals bestimmt wird und eine Länge einer kleinen Halbachse (b) der Ellipse ($x_E$) anhand der Brennpunkte ($x_{F1}$, $x_{F2}$) und der Länge der großen Halbachse (a) bestimmt wird.

3. Verfahren nach Anspruch 2, durch gekennzeichnet, dass eine Exzentrizität (e) der Ellipse ($x_E$) anhand eines Abstands der Brennpunkte ($x_{F1}$, $x_{F1}$) bestimmt wird und die Länge der kleinen Halbachse (b) aus der Länge der großen Halbachse (a) und der Exzentrizität (e) bestimmt wird.

4. Verfahren nach einem der vorhergehenden Ansprüche,
**dadurch gekennzeichnet, dass**
das weitere Objektmerkmal ($x_P$, $x_L$) bestimmt und in eine digitale Umgebungskarte, welche die Umgebung des Kraftfahrzeugs beschreibt, eingetragen wird und anschließend das unscharfe Merkmal ($x_U$) bestimmt und in die Umgebungskarte eingetragen wird.

5. Verfahren nach einem der vorhergehenden Ansprüche,
**dadurch gekennzeichnet, dass**
zum Bestimmen des zusammengelegten Objektmerkmals aus dem weiteren Objektmerkmal ($X_P$, $X_L$) eine lineare Abbildungsvorschrift bestimmt wird, welche die Innovationsfunktion (h) und einen Verstärkungsfaktor (K) für die Innovationsfunktion (h) umfasst, wobei der Verstärkungsfaktor (K) von einer räumlichen Unsicherheit des weiteren Objektmerkmals ($x_P$, $x_L$) und einer räumlichen Unsicherheit des unscharfen Merkmals ($x_U$) abhängig ist.

6. Verfahren nach Anspruch 5,
**dadurch gekennzeichnet, dass**
der Verstärkungsfaktor (K) derart bestimmt wird, dass eine räumliche Unsicherheit des zusammengelegten Objektmerkmals minimal ist.

7. Verfahren nach einem der vorhergehenden Ansprüche,
**dadurch gekennzeichnet, dass**
als das weitere Objektmerkmal ($x_P$, $x_L$) ein Punktmerkmal ($x_P$) oder ein Linienmerkmal ($x_L$) bestimmt wird.

8. Verfahren nach einem der vorhergehenden Ansprüche,
**dadurch gekennzeichnet, dass**
zum Bestimmen der Innovationsfunktion (h) ein Messmodell ($a_P$, $a_L$) bestimmt wird, welches einen Abstand (d) zwischen dem unscharfen Merkmal ($x_U$) und dem Punktmerkmals ($x_P$) oder einen Abstand zwischen dem unscharfen Merkmal ($x_U$) und dem Linienmerkmal ($x_L$) beschreibt.

9. Verfahren nach Anspruch 8,
**dadurch gekennzeichnet, dass**
falls das weitere Objektmerkmal ($x_P$, $x_L$) das Punktmerkmal ($x_P$) ist, zum Bestimmen des Messmodells (ap) eine generierte Ellipse ($x'_E$) so bestimmt wird, dass das Punktmerkmal ($x_P$) auf der generierten Ellipse ($x'_E$) liegt.

**10.** Verfahren nach Anspruch 8,
**dadurch gekennzeichnet, dass**
falls das weitere Objektmerkmal ($x_P$, $x_L$) das Linienmerkmal ($x_L$) ist, zum Bestimmen des Messmodells eine generierte Ellipse ($x'_E$) so bestimmt wird, dass das Linienmerkmal ($x_L$) tangential zu der generierten Ellipse ($x'_E$) verläuft.

**11.** Verfahren nach einem der Ansprüche 8 bis 10,
**dadurch gekennzeichnet, dass**
eine Innovation, welche eine Ausgabe der Innovationsfunktion (h) beschreibt, anhand eines Unterschieds zwischen der Länge der großen Halbachse (a) der Ellipse ($x_E$) und dem Messmodell ($a_P$, $a_L$) bestimmt wird.

**12.** Steuereinrichtung (5) für ein Fahrerassistenzsystem (2) eines Kraftfahrzeugs (1), welches zum Durchführen eines Verfahrens nach einem der vorhergehenden Ansprüche ausgelegt ist.

**13.** Fahrerassistenzsystem (2) für ein Kraftfahrzeug (1) mit einer Steuereinrichtung (5) nach Anspruch 12 sowie mit einem ersten Sensor (6) und einem zweiten Sensor (6), wobei der erste Sensor (6) und der zweite Sensor (6) Ultraschallsensoren sind.

**14.** Kraftfahrzeug (1) mit einem Fahrerassistenzsystem (2) nach Anspruch 13.

**Claims**

**1.** Method for capturing at least one object (3) in a surrounding area (4) of a motor vehicle (1), in which a first sensor (6) is controlled to emit a sensor signal, sensor data are received from a second sensor (6), which describe the sensor signal reflected by the at least one object (3), a fuzzy feature ($x_U$) is determined from the sensor data as an object feature ($x_P$, $x_L$, $x_U$) for describing the at least one object (3), wherein the fuzzy feature ($x_U$) describes a distance between the at least one object (3) and the first sensor (6) and a distance between the at least one object (3) and the second sensor (6), wherein the first sensor (6) and the second sensor (6) are ultrasound sensors and the installation positions of the first sensor (6) and of the second sensor (6) are known, wherein the fuzzy feature ($x_U$) is described as an ellipse ($x_E$) and a further object feature ($x_P$, $x_L$), which describes the at least one object (3), is determined on the basis of sensor data of at least one further measurement of the first and/or the second sensor (6), **Characterized in that**
the further object feature ($x_P$, $x_L$) and the fuzzy feature ($x_U$) are transferred into a common state space using an innovation function (h), wherein the innovation function (h) describes a similarity between the fuzzy feature ($x_U$) and the further object feature ($x_P$, $x_L$), and a merged object feature is determined from the further object feature ($x_P$, $x_L$) on the basis of the innovation function (h) .

**2.** Method according to Claim 1,
**characterized in that**
focal points ($x_{F1}$, $x_{F2}$) of the ellipse ($x_U$) are determined on the basis of a position ($x_{S1}$) of the first sensor (6) and a position ($x_{S2}$) of the second sensor (6), a length of a semi-major axis (a) of the ellipse ($x_E$) is determined on the basis of a runtime of the sensor signal and a length of a semi-minor axis (b) of the ellipse ($x_E$) is determined on the basis of the focal points ($x_{F1}$, $x_{F2}$) and the length of the semi-major axis (a).

**3.** Method according to Claim 2,
**characterized in that**
an eccentricity (e) of the ellipse ($x_E$) is determined on the basis of a distance of the focal points ($x_{F1}$, $x_{F2}$) and the length of the semi-minor axis (b) is determined from the length of the semi-major axis (a) and the eccentricity (e).

**4.** Method according to one of the preceding claims, **characterized in that**
the further object feature ($x_P$, $x_L$) is determined and entered in a digital surroundings map, which describes the surrounding area of the motor vehicle, and subsequently the fuzzy feature ($x_U$) is determined and entered in the surroundings map.

**5.** Method according to one of the preceding claims, **characterized in that**
to determine the merged object feature from the further object feature ($x_P$, $x_L$), a linear mapping rule is determined, which comprises the innovation function (h) and an amplification factor (K) for the innovation function (h), wherein the amplification factor (K) is dependent on a spatial uncertainty of the further object feature ($x_P$, $x_L$) and a spatial uncertainty of the fuzzy feature ($x_U$).

6. Method according to Claim 5,
**characterized in that**
the amplification factor (K) is determined such that a spatial uncertainty of the merged object feature is minimal.

7. Method according to one of the preceding claims, **characterized in that**
a point feature ($x_P$) or a line feature ($x_L$) is determined as the further object feature ($x_P$, $x_L$).

8. Method according to one of the preceding claims, **characterized in that**
to determine the innovation function (h), a measurement model ($a_P$, $a_L$) is determined, which describes a distance (d) between the fuzzy feature ($x_U$) and the point feature ($x_P$) or a distance between the fuzzy feature ($x_U$) and the line feature ($X_L$).

9. Method according to Claim 8,
**characterized in that**,
if the further object feature ($x_P$, $x_L$) is the point feature ($x_P$), to determine the measurement model ($a_P$) a generated ellipse ($x'_E$) is determined such that the point feature ($x_P$) lies on the generated ellipse ($x'_E$).

10. Method according to Claim 8,
**characterized in that**,
if the further object feature ($x_P$, $x_L$) is the line feature ($x_L$), to determine the measurement model a generated ellipse ($x'_E$) is determined such that the line feature ($x_L$) extends tangentially to the generated ellipse ($x'_E$).

11. Method according to one of Claims 8 to 10, **characterized in that**
an innovation which describes an output of the innovation function (h) is determined on the basis of a difference between the length of the semi-major axis (a) of the ellipse ($x_E$) and the measurement model ($a_P$, $a_L$).

12. Controller (5) for a driver assistance system (2) of a motor vehicle (1), which is designed to carry out a method according to one of the preceding claims.

13. Driver assistance system (2) for a motor vehicle (1) having a controller (5) according to Claim 12 and also having a first sensor (6) and a second sensor (6), wherein the first sensor (6) and the second sensor (6) are ultrasound sensors.

14. Motor vehicle (1) having a driver assistance system (2) according to Claim 13.

**Revendications**

1. Procédé pour détecter au moins un objet (3) dans un environnement (4) d'un véhicule automobile (1), selon lequel un premier capteur (6) est excité pour émettre un signal de capteur, des données de capteur sont reçues par un deuxième capteur (6), lesquelles décrivent le signal de capteur réfléchi par l'au moins un objet (3), une caractéristique floue ($x_U$) en tant que caractéristique d'objet ($x_P$, $x_L$, $x_U$) est déterminée à partir des données de capteur en vue de décrire l'au moins un objet (3), la caractéristique floue ($x_U$) décrivant un écart entre l'au moins un objet (3) et le premier capteur (6) et un écart entre l'au moins un objet (3) et le deuxième capteur (6), le premier capteur (6) et le deuxième capteur (6) étant des capteurs à ultrasons et les positions d'installation du premier capteur (6) et du deuxième capteur (6) étant connues, la caractéristique floue ($x_U$) étant décrite comme une ellipse ($X_E$) et une caractéristique d'objet supplémentaire ($x_P$, $x_L$) étant déterminée à l'aide de données de capteur d'au moins une mesure supplémentaire du premier et/ou du deuxième capteur (6), laquelle décrit l'au moins un objet (3),
**caractérisé en ce que**
la caractéristique d'objet supplémentaire ($x_P$, $x_L$) et la caractéristique floue ($x_U$) sont transférées dans un espace d'état commun avec une fonction d'innovation (h), la fonction d'innovation (h) décrivant une similarité entre la caractéristique floue ($x_U$) et la caractéristique d'objet supplémentaire ($x_P$, $x_L$), et une caractéristique d'objet fusionnée étant déterminée à partir de la caractéristique d'objet supplémentaire ($x_P$, $x_L$) à l'aide de la fonction d'innovation (h).

2. Procédé selon la revendication 1, **caractérisé en ce que** les foyers ($x_{F1}$, $x_{F2}$) de l'ellipse ($x_U$) sont déterminés à l'aide d'une position ($x_{S1}$) du premier capteur (6) et d'une position ($x_{S2}$) du deuxième capteur (6), une longueur d'un grand demi-axe (a) de l'ellipse ($x_E$) est déterminée à l'aide d'un temps de propagation du signal de capteur et une longueur d'un petit demi-axe (b) de l'ellipse ($x_E$) est déterminée à l'aide des foyers ($x_{F1}$, $x_{F2}$) et de la longueur du grand demi-axe (a).

3.  Procédé selon la revendication 2, **caractérisé en ce qu'**une excentricité (e) de l'ellipse ($x_E$) est déterminée à l'aide d'un écart entre les foyers ($x_{F1}$, $x_{F1}$) et la longueur du petit demi-axe (b) est déterminée à partir de la longueur du grand demi-axe (a) et de l'excentricité (e) .

4.  Procédé selon l'une des revendications précédentes, **caractérisé en ce que** la caractéristique d'objet supplémentaire ($x_P$, $x_L$) est déterminée et inscrite dans une carte d'environnement qui décrit l'environnement du véhicule automobile, et ensuite la caractéristique floue ($x_U$) est déterminée et inscrite dans la carte d'environnement.

5.  Procédé selon l'une des revendications précédentes, **caractérisé en ce que** pour déterminer la caractéristique d'objet fusionnée, une prescription de représentation est déterminée à partir de la caractéristique d'objet supplémentaire ($x_P$, $x_L$), laquelle comporte la fonction d'innovation (h) et un facteur de gain (K) pour la fonction d'innovation (h), le facteur de gain (K) étant dépendant d'une incertitude spatiale de la caractéristique d'objet supplémentaire ($x_P$, $x_L$) et d'une incertitude spatiale de la caractéristique floue ($x_U$).

6.  Procédé selon la revendication 5, **caractérisé en ce que** le facteur de gain (K) est déterminé de telle sorte qu'une incertitude spatiale de la caractéristique d'objet fusionnée est minimale.

7.  Procédé selon l'une des revendications précédentes, **caractérisé en ce que** la caractéristique d'objet supplémentaire ($x_P$, $x_L$) déterminée est une caractéristique ponctuelle ($x_P$) ou une caractéristique linéaire ($x_L$).

8.  Procédé selon l'une des revendications précédentes, **caractérisé en ce que** pour déterminer la fonction d'innovation (h), un modèle de mesure ($a_P$, $a_L$) est déterminé, lequel décrit un écart (d) entre la caractéristique floue ($x_U$) et la caractéristique ponctuelle ($x_P$) ou un écart entre la caractéristique floue ($x_U$) et la caractéristique linéaire ($x_L$).

9.  Procédé selon la revendication 8, **caractérisé en ce que** dans le cas où la caractéristique d'objet supplémentaire ($x_P$, $x_L$) est la caractéristique ponctuelle ($x_P$), une ellipse générée ($x'_E$) est déterminée en vue de déterminer le modèle de mesure ($a_P$) de telle sorte que la caractéristique ponctuelle ($x_P$) se trouve sur l'ellipse générée ($x'_E$).

10. Procédé selon la revendication 8, **caractérisé en ce que** dans le cas où la caractéristique d'objet supplémentaire ($x_P$, $x_L$) est la caractéristique linéaire ($x_L$), une ellipse générée ($x'_E$) est déterminée en vue de déterminer le modèle de mesure de telle sorte que la caractéristique linéaire ($x_L$) suit un tracé tangentiel à l'ellipse générée ($x'_E$).

11. Procédé selon l'une des revendications 8 à 10, **caractérisé en ce qu'**une innovation qui décrit un produit de la fonction d'innovation (h) est déterminée à l'aide d'une différence entre la longueur du grand demi-axe (a) de l'ellipse ($x_E$) et le modèle de mesure ($a_P$, $a_L$).

12. Dispositif de commande (5) pour un système d'aide à la conduite (2) d'un véhicule automobile (1), lequel est conçu pour mettre en œuvre un procédé selon l'une des revendications précédentes.

13. Système d'aide à la conduite (2) pour un véhicule automobile (1) équipé d'un dispositif de commande (5) selon la revendication 12 ainsi que d'un premier capteur (6) et d'un deuxième capteur (6), le premier capteur (6) et le deuxième capteur (6) étant des capteurs à ultrasons.

14. Véhicule automobile (1) comprenant un système d'aide à la conduite (2) selon la revendication 13.

Fig.1

Fig.2

Fig.3

Fig.4

Fig.5

Fig.6

**IN DER BESCHREIBUNG AUFGEFÜHRTE DOKUMENTE**

**In der Beschreibung aufgeführte Patentdokumente**

- DE 112011105533 T5
- DE 102013221263 A1
- EP 1731922 A1
- DE 102010045657 A1
- US 20090292468 A1
- WO 2013071190 A1

**In der Beschreibung aufgeführte Nicht-Patentliteratur**

- **SEBASTIAN ZUTHER et al.** *Multisensorsystem mit schmalbandigen Radarsensoren zum Fahrzeug-seitenschutz,* 01. Januar 2014